# EUROPÄISCHE PATENTSCHRIFT

(11) **EP 1 128 630 B1**
(45) Veröffentlichungstag und Bekanntmachung des Hinweises auf die Patenterteilung: **27.09.2006**
(21) Anmeldenummer: 01101342.2
(22) Anmeldetag: 22.01.2001
(51) Int. Cl.: H04L 29/06

(54) **Verfahren zur Übertragung von Informationen an einen Empfänger**
Method for transmission of information to a receiver
Méthode de transmission d'informations vers un récepteur

(30) Priorität: 24.02.2000 DE 10008716
(43) Veröffentlichungstag der Anmeldung: 29.08.2001
(73) Patentinhaber: Bayerische Motoren Werke Aktiengesellschaft, 80809 München (DE)
(72) Erfinder: Steinberg, Karl-Ernst, 81249 München (DE); Vögel, Hans-Jörg, 82216 Gerlinden (DE); Kellerer, Wolfgang, 82256 Fürstenfeldbruck (DE)

(56) Entgegenhaltungen:
- EP-A- 0 876 023
- EP-A- 1 061 688
- WO-A-94/11960
- WATERS A G ET AL: "BROADCAST FILE DISTRIBUTION PROTOCOLS FOR SATELLITE NETWORKS" NATIONAL CONFERENCE ON TELECOMMUNICATIONS. YORK, 2 - 5 APRIL, 1989, LONDON, IEE, GB, Bd. CONF. 2, 2. April 1989 (1989-04-02), Seiten 133-138, XP000041181 ISBN: 0-85296-378-5
- PATENT ABSTRACTS OF JAPAN Bd. 1998, Nr. 14, 31. Dezember 1998 (1998-12-31) & JP 10 257001 A (XING:KK;BROTHER IND LTD), 25. September 1998 (1998-09-25)
- STIES P ET AL: "BROADBAND INTERNET ACCESS OVER DIGITAL VIDEO BROADCAST (DVB)" PROCEEDINGS OF THE EUROPEAN CONFERENCE ON NETWORKS AND OPTICAL COMMUNICATIONS 1999. NOC'99. BROADBAND ACCESS AND TECHNOLOGY, AMSTERDAM: IOS PRESS, NL, Bd. PART 1, 1999, Seiten 257-264, XP000829394 ISBN: 90-5199-496-6

## Beschreibung

Die Erfindung betrifft ein Verfahren zur Übertragung von Informationen an einen Empfänger.

Insbesondere bei der Übertragung von großen Datenmengen, beispielsweise multimedialen elektronischen Nachrichten, an einen Empfänger, sind Mobilfunksysteme in der Regel überfordert.

Aus der DE 198 41 541 A1 ist ein "Audio on Demand System" bekannt, bei dem von einer schmalbandigen Sendereinheit Daten angefordert werden können, die dann von einem Server an einen breitbandigen Empfänger übertragen werden. Auf diese Weise können auch größere Datenmengen übertragen werden. Allerdings ist es bei diesem System notwendig, die Daten erst anzufordern. Die Daten können indes nicht automatisch zur Verfügung gestellt werden.

Aus der Druckschrift WATERS A G ET AL: "BROADCAST FILE DISTRIBUTION PROTOCOLS FOR SATELLITE NETWORKS" [NATIONAL CONFERENCE ON TELECOMMUNICATIONS. YORK, 2 - 5 APRIL, 1989, LONDON, IEE, GB, Bd. CONF. 2, 2, April 1989, Seiten 133-138, ISBN: 0-85296-378-5] ist ein Verfahren zur Übertragung von Informationen an einen Empfänger bekannt. Beschrieben ist die Übertragung einer Information von einem Sender über eine unidirektionale Übertragungsstrecke an einen Empfänger, wobei der Sender eine Liste der übertragenen Informationen erstellt. Ein Empfänger empfängt die übertragene Information und erstellt eine Liste der empfangenen Informationen. In einem weiteren Schritt wird eine bidirektionale Verbindung zwischen Sender und Empfänger aufgebaut und die beiden Listen werden nachfolgend abgeglichen. Die in der Liste der empfangenen Informationen fehlenden oder als fehlerhaft gekennzeichneten Informationen werden erneut vom Sender an den Empfänger übertragen.

Ein solches Verfahren ist ferner aus der Druckschrift PATENT ABSTRACT OF JAPAN Bd. 1998, Nr. 14, 31. Dezember 1998 & JP 10 257001 A, 25. September 1998 bekannt.

Schließlich ist aus der EP-A-0 876 023 ein Verfahren bekannt, bei dem abweichend von dem vorstehend beschriebenen, bekannten Verfahren die empfängerseitig erstellte Liste der empfangenen Informationen nicht zum Abgleich verwendet wird.

Aufgabe der vorliegenden Erfindung ist es, eine kostengünstige Übertragung großer Datenmengen zu erreichen.

Diese Aufgabe wird durch die im Anspruch 1 genannten Merkmale gelöst.

Demgemäß wird in dem erfindungsgemäßen Verfahren zur Übertragung von Informationen an einen Empfänger die Information über eine unidirektionale Übertragungsstrecke von einem Sender an einen Empfänger übertragen. Insbesondere handelt es sich dabei um einen mobilen Empfänger. Gleichzeitig wird im Sender eine Liste der übertragenen Informationen erstellt. Im Empfänger wird in analoger Weise eine Liste der empfangenen Informationen erstellt. Durch einen Aufbau einer bidirektionalen Verbindung zwischen Sender und Empfänger können die Listen ausgetauscht und verglichen werden. Wird festgestellt, daß eine in der Liste des Senders übertragene Information in der Liste des Empfängers nicht oder nicht in korrekter Weise enthalten ist, so wird eine neue Übertragung dieser Information durch den Sender an den Empfänger veranlaßt.

Vorzugsweise kann man für die unidirektionale Übertragung auf bereits vorhandene Rundfunk-Verteilnetze, insbesondere digitale Rundfunk-Verteilnetze, zurückgreifen. Solche Verteilnetze bieten eine große Bandbreite, so daß eine große Anzahl von Empfängern erreicht werden kann, da die Nachrichtenverkehrslast im wesentlichen im statistischen Mittel betrachtet werden muß.

Alternativ können auch andere Verteilnetze, die auch heute bereits vorhanden sind, verwendet werden. Für stationäre Endsysteme eignen sich Verteilnetze, wie das Kabelnetz, Zustellmechanismen von vorhandenen digitalen Kommunikationsnetzen, wie z.B. ISDN Messages auf Mailboxen, oder die Verwendung von Signalisierungsleitungen, ohne daß eine Verbindung aufgebaut wird (z.B. ISDN-D-Kanal).

Alle Nachrichten werden in der Regel nur einmal übertragen. Im Gegensatz zu einem Nachrichtenübertragungssystem, bei dem die Nachricht selbst von einer bidirektionalen Mobilfunkeinrichtung übertragen wird, gibt es keine Einschränkungen in der Nachrichtenlänge. Ferner ist - im Gegensatz zu dem in der oben genannten DE 198 41 541 A1 beschriebenen "On Demand System" - kein Anstoßen der Übertragung einer Nachricht notwendig. Die Nachrichten werden sofort, wenn sie beim Sender eintreffen, übertragen.

Ein bevorzugter Anwendungsbereich der vorliegenden Erfindung ist dort gegeben, wo der Sender per se selbst nicht im Besitz der zu übertragenden Informationen ist. Dann ist er mit einer oder mehreren Quellen verbunden, von denen die zu übertragenen Informationen stammen. Eine solche Quelle kann beispielsweise ein Absender im Internet sein. Die Verbindung zwischen Absender und Sender wird dann über eine an sich bekannte Internetverbindung hergestellt. Sobald eine elektronische Nachricht, beispielsweise eine Email, von einem Absender beim Sender ankommt, wird diese über die unidirektionale Übertragungsstrecke, beispielsweise das Rundfunk-Verteilnetz, an den Empfänger, insbesondere den mobilen Empfänger übertragen und steht dort sofort abrufbereit.

Gemäß einer bevorzugten Ausführungsform behält der Sender in seinem Zugriffsbereich eine Kopie der übertragenen Informationen gespeichert. Wird dann durch einen Vergleich der beiden Listen festgestellt, daß nicht alle Informationen ordnungsgemäß übertragen worden sind, so kann eine nochmalige Übertragung der bereits gesendeten, jedoch nicht ordnungsgemäß übertragenen Nachrichten ohne weiteres veranlaßt werden. Dazu wird beispielsweise die Liste aus dem Sender an den Empfänger übertragen. Dort werden beide Listen verglichen. Wird eine Unregelmäßigkeit festgestellt, veranlaßt der Empfänger über die bidirektionale Verbindung den Sender zur nochmaligen Übertragung der fehlerhaft übertragenen Information. Nach dem erfolgreichen Überprüfen der Listen aus Sender und Empfänger können diese Listen gelöscht werden.

Gemäß einer alternativen Ausführungsform kann die Liste aus dem Empfänger auch an den Sender übertragen werden. Wird dann eine Unregelmäßigkeit festgestellt, überträgt der Sender von sich aus die Nachricht nochmals neu. Auch in diesem Fall ist es möglich, die Listen nach einer erfolgreichen Prüfung oder nochmaligen Übertragung zu löschen.

Mit dem Löschen der Listen werden vorzugsweise gleichzeitig die im Sender hinterlegten Kopien der übertragenen Daten gelöscht.

Über die bidirektionale Schnittstelle werden somit keine Nachrichten übertragen, sondern lediglich Tabellen bzw. Listen ausgetauscht. Die fehlerhaft oder gar nicht übertragenen Nachrichten werden wiederum über die unidirektionale Schnittstelle übertragen. Ein Nutzer des Empfängers kann durch diesen Ablauf immer unmittelbar auf eine elektronische Nachricht zugreifen, ohne daß ein Abruf stattfinden muß. Ein solcher Abruf mit nachfolgender Übertragung könnte bei multimedialen Nachrichten mit einer großen Datenmenge möglicherweise auch einige Zeit in Anspruch nehmen. Ein sich beispielsweise nur kurze Zeit im Fahrzeug aufhaltender Systembediener müßte dann den Empfang der Nachrichten abwarten.

Eine bevorzugte Ausführungsform ist dadurch gekennzeichnet, daß die bidirektionale Verbindung nicht kontinuierlich, sondern nur zeitweise aufgebaut wird. Durch eine solche sporadische, in bestimmten Zeitabständen oder auf Anforderung erfolgende Verbindung ist ein kostengünstiger Abgleich gegeben, der ein bidirektionales Netz, beispielsweise ein Mobilfunknetz nicht übermäßig belastet. Als bidirektionaler Übertragungsweg kann beispielsweise eine mobile Telefonverbindung, insbesondere eine Mobilfunk-Verbindung (z.B. GSM, FPRS, CDMA, W_CDMA) gewählt werden.

Erfindungsgemäß wird die Übertragungsstrecke nur in einem bestimmten lokalen Übertragungsbereich aufgebaut. Die zu übertragende elektronische Nachricht wird nur in einem bestimmten Empfangsgebiet ausgesendet, in dem sich der mobile Benutzer befindet. Die Position des Nutzers wird über eine an sich bekannte Ortung (z.B. GPS-System) ermittelt und dann über die bidirektionale Verbindung an den Sender übermittelt.

Damit die Listen in den beiden Vorrichtungen, Sender und Empfänger, nicht zu lang werden, kann vorgesehen werden, daß nur Informationen mit bestimmten definierten Merkmalen aufgenommen und in der Liste abgelegt werden. Beispielsweise kann realisiert werden, daß nur Informationen innerhalb eines bestimmten Zeitfensters enthalten sind. Darüber hinaus kann eine Gewichtung der Informationen erfolgen. Bereits weiter oben wurde auch erwähnt, daß die Listen nach einer Überprüfung gelöscht werden können.

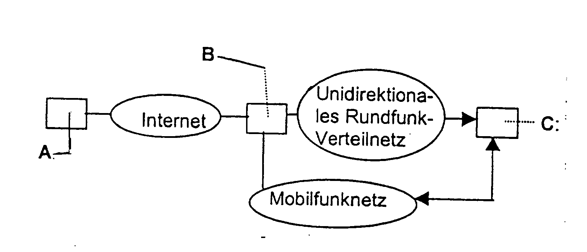

Ein konkretes Ausführungsbeispiel der vorliegenden Erfindung wird anhand der einzigen beiliegenden Zeichnung näher erläutert. Die einzige Zeichnung zeigt ein schematisches Blockdiagramm, die den Ablauf des erfindungsgemäßen Verfahrens darstellt.

Von einer Quelle A wird eine an einen Empfänger C zu übertragende multimediale Nachricht mit umfangreichem Dateninhalt zunächst über das Internet an einen Sender B geschickt. Der Sender B besitzt dabei eine bestimmte Internetadresse. Nach Empfang der multimedialen Nachricht sendet der Sender B diese Nachricht sofort über ein unidirektionales Rundfunk-Verteilnetz, also über bestimmte Sendemasten in einem bestimmten Sendegebiet an einen mobilen Empfänger aus. Über die Funkübertragungsstrecke des Rundfunk-Verteilnetzes erreicht die multimediale Nachricht den mobilen Empfänger C und kann von diesem aufgenommen werden.

Noch vor Absenden der multimedialen Nachricht vom Sender B wird eine Kopie dieser Nachricht erstellt und im Sender B abgespeichert. Parallel dazu wird die abgesendete Nachricht in einer Liste, die beim Sender B geführt wird, eingetragen.

In gleicher Weise wird bei dem mobilen Empfänger C eine weitere Liste der empfangenen Informationen geführt. Die gerade übermittelte multimediale Nachricht erscheint als letzter Eintrag in dieser Liste. Ein Benutzer nun kann die übertragenen Nachrichten aus dem Empfänger abrufen.

In regelmäßigen Abständen wird über eine Telefonverbindung (hier: Mobilfunknetz) eine bidirektionale Verbindung zwischen dem mobilen Empfänger C und dem Sender B hergestellt. Als Initiator der Verbindungserstellung wirkt der mobile Empfänger C. Nach dem Herstellen der Mobilfunkverbindung sendet der mobile Empfänger seine Liste an den Sender B, der die beiden Listen miteinander vergleicht. Wird eine Unregelmäßigkeit festgestellt, so wird die fehlerhaft oder nicht übertragene Information nochmals abgeschickt. Wird keine Unregelmäßigkeit festgestellt, so werden die Liste sowie die den Listeneinträgen zugeordneten Kopien der Informationen im Sender gelöscht. Ferner wird dem Empfänger ein entsprechendes Signal übermittelt, woraufhin auch dessen Liste gelöscht wird. Mit dieser Vorgehensweise vermeidet man die übermäßige Speicherung von Informationen sowohl sender- als auch empfängerseitig.

Vorliegend erfolgt der Aufbau der bidirektionalen Verbindung in gleichmäßigen zeitlichen Abständen, beispielsweise in Abständen von 2 Stunden. Alternativ kann eine solche bidirektionale Verbindung auch von einem Bediener des mobilen Empfängers C manuell hergestellt werden.

Die in den Listen gespeicherten Informationen werden längstens über einen bestimmten Zeitraum von beispielsweise 1 Woche gespeichert. Nach diesem Zeitraum werden die Informationen wieder aus der Liste entfernt. Zudem wird die Kopie, welche zu einer Information in der Liste gehört und beim Sender B hintergelegt ist, gelöscht. Damit wird nochmals ein Überlauf von Informationen verhindert.

Insgesamt ist mit der vorliegenden Erfindung eine automatische Übermittlung auch von großen Datenmengen an Empfänger, insbesondere bestimmte mobile Empfänger, sichergestellt, wobei sich auch die Kosten durch eine Nutzung der bereits vorhandenen Infrastrukturen in Grenzen halten lassen. Zudem erfolgt ein verteiltes Laden von Informationen über die Zeit, was insgesamt zu einer hohen Netzauslastung und einer besseren Verkehrsoptimierung führt. Von Vorteil ist die hohe Verfügbarkeit für die Teilnehmer und die über die hohe Bandbreite realisierbare Informationsübertragungsrate. Auch bei zukünftigen Mobilfunkgenerationen werden solch hohe Übertragungsraten, wie sie mit Rundfunk-Verteilnetzen erreichbar sind, nicht möglich sein.

Das vorliegende Verfahren eignet sich insbesondere für elektronische Nachrichten, die über das Internet versandt werden (z.B. Emails) sowie für die Übertragung jeglicher elektronischer Nachrichten auch anderer Datennetze (z.B. Pagersysteme).

Grundsätzlich eignet sich das vorliegende Verfahren sowohl für stationäre Endsysteme wie auch für mobile Empfänger, welche beide über Verteilernetze erreichbar sein müssen oder welche Daten über Zustellmechanismen digitaler Kommunikationsnetze erhalten können. Schließlich eignet sich das vorliegende Verfahren auch für stationäre Endsysteme, welche über Signalleitungen beständig Daten empfangen, ohne daß eine eigentliche Verbindung aufgebaut ist (z.B. ISDN-D-Kanal).

## Patentansprüche

1. Verfahren zur Übertragung von Informationen an einen Empfänger (C) mit den Schritten:
- Übertragung einer Information von einem Sender (B) über eine unidirektionale Übertragungsstrecke an einen Empfänger (C) und senderseitiges Erstellen einer Liste der übertragenen Informationen,
- Empfangen der übertragenen Information mittels des Empfängers (C) und empfängerseitiges Erstellen einer weiteren Liste der empfangenen Informationen,
- Aufbauen einer bidirektionalen Verbindung zwischen Sender (B) und Empfänger (C) und Abgleichen der beiden Listen, und
- erneute Übertragung einer in der Liste mit den empfangenen Informationen fehlenden oder als fehlerhaft gekennzeichneten Information
**dadurch gekennzeichnet, dass**
- die Position des Empfängers (C) ermittelt wird,
- die Position des Empfängers (C) über die bidirektionale Verbindung an den Sender (B) übermittelt wird, und
- die zu übertragenden Informationen nur in einem bestimmten Empfangsgebiet ausgesendet werden, in dem sich der Empfänger (C) befindet.

2. Verfahren nach Anspruch 1,
**dadurch gekennzeichnet,**
**dass** es sich bei dem Empfänger (C) um einen mobilen Empfänger handelt.

3. Verfahren nach Anspruch 1 oder 2,
**dadurch gekennzeichnet,**
**dass** die zu übertragende Information vor der Übertragung kopiert und im Zugriffsbereich des Senders (B) abgespeichert wird.

4. Verfahren nach einem der Ansprüche 1 bis 3,
**dadurch gekennzeichnet,**
**dass** die bidirektionale Verbindung zeitweise, insbesondere sporadisch, in bestimmten Zeitabständen oder auf Anforderung aufgebaut wird.

5. Verfahren nach einem der vorhergehenden Ansprüche,
**dadurch gekennzeichnet,**
**dass** für die bidirektionale Verbindung eine mobile Telefon- oder Datenverbindung gewählt wird.

6. Verfahren nach einem der vorhergehenden Ansprüche,
**dadurch gekennzeichnet,**
**dass** die unidirektionale Übertragungsstrecke unter Verwendung eines bestehenden Verteilnetzes, insbesondere einer Funkstrecke, einer Rundfunk-Übertragungsstrecke, eines Kabelnetzes, eines Zustellmechanismus eines digitalen Kommunikationsnetzes oder von bestehenden Signalisierungsleitungen, hergestellt wird.

7. Verfahren nach einem der vorhergehenden Ansprüche,
**dadurch gekennzeichnet,**
**dass** der Sender mit einer oder mehreren Quellen (A) zur Verfügungstellung der zu übertragenden Informationen verbunden ist und dass von den Quellen (A) Informationen an den Sender (B) übertragen werden.

8. Verfahren nach Anspruch 7,
**dadurch gekennzeichnet,**
**dass** eine Verbindung zwischen einer Quelle (A) und dem Sender (B) über das Internet hergestellt wird.

9. Verfahren nach einem der vorhergehenden Ansprüche,
**dadurch gekennzeichnet,**
**dass** in den Listen nur Informationen mit bestimmten definierten Merkmalen aufgenommen werden.

10. Verfahren nach Anspruch 9,
**dadurch gekennzeichnet,**
**dass** als definiertes Merkmal ein Zeitraum gilt, in dem die Information übertragen wurde.

11. Verfahren nach einem der vorhergehenden Ansprüche,
**dadurch gekennzeichnet,**
**dass** die Listen und/oder die im Zugriffsbereich des Senders (B) befindlichen kopierten Informationen bei Vorliegen definierter Bedingungen gelöscht werden.

## Claims

1. A method for transmitting information to a receiver (C) comprising the steps:
- transmitting information from a transmitter (B) to a receiver (C) via a unidirectional transmission path and compiling a list, on the transmitter side, of the transmitted information,
- receiving the transmitted information by means of the receiver (C) and compiling a further list, on the receiver side, of the information received,
- constructing a bidirectional link between the transmitter (B) and receiver (C) and comparing the two lists,
- again transmitting information missing or identified as faulty in the list with the information received,
**characterised in that**
- the position of the receiver (C) is determined,
- the position of the receiver (C) is transmitted via the bidirectional link to the transmitter (B), and
- the information to be transmitted is only transmitted in a specific reception area, in which the receiver (C) is located.

2. A method according to claim 1, **characterised in that** the receiver (C) is a mobile receiver.

3. A method according to claim 1 or claim 2, **characterised in that** the information to be transmitted is copied before transmission and stored in the access area of the transmitter (B).

4. A method according to any one of claims 1 to 3, **characterised in that** the bidirectional link is constructed temporarily, more especially sporadically, at specific time intervals or on request.

5. A method according to any one of the preceding claims, **characterised in that** a mobile telephone or data link is selected for the bidirectional link.

6. A method according to any one of the preceding claims, **characterised in that** the unidirectional transmission path is produced using an existing distribution network, more especially a radio path, a radio transmission path, a cable network, an access mechanism of a digital communication network or existing signalling lines.

7. A method according to any one of the preceding claims, **characterised in that** the transmitter is connected to one or more sources (A) for providing the information to be transmitted, and **in that** information is transmitted from the sources (A) to the transmitter (B).

8. A method according to claim 7, **characterised in that** a link is produced between a source (A) and the transmitter (B) via the internet.

9. A method according to any one of the preceding claims, **characterised in that** only information with specifically defined features is included in the lists.

10. A method according to claim 9, **characterised in that** a time period in which the information was transmitted is considered a defined feature.

11. A method according to any one of the preceding claims, **characterised in that** the lists and/or the copied information located in the access area of the transmitter (B) is deleted if defined conditions are present.

## Revendications

1. Procédé de transmission d'informations vers un récepteur (C) avec les étapes :
- transmission d'une information depuis un émetteur (B) par une voie de transmission unidirectionnelle vers un récepteur (C), et élaboration côté émetteur d'une liste des informations transmises,
- réception de l'information reçue au moyen du récepteur (C), et élaboration côté récepteur d'une autre liste des informations reçues,
- établissement d'une connexion bidirectionnelle entre l'émetteur (B) et le récepteur (C), et comparaison des deux listes, et
- nouvelle transmission d'une information manquant ou étant identifiée comme erronée dans la liste avec les informations reçues,
**caractérisé en ce qu'**
- on détermine la position du récepteur (C),
- on transmet la position du récepteur (C) par la connexion bidirectionnelle vers l'émetteur (B), et
- les informations à transmettre ne sont envoyées que dans une zone de réception déterminée dans laquelle se situe le récepteur (C).

2. Procédé selon la revendication 1,
**caractérisé en ce que**
le récepteur (C) est un récepteur mobile.

3. Procédé selon la revendication 1 ou 2,
**caractérisé en ce que**
l'information à transmettre est copiée avant la transmission et stockée dans la zone d'accès de l'émetteur (B).

4. Procédé selon l'une quelconque des revendications 1 à 3,
**caractérisé en ce que**
la connexion bidirectionnelle est établie temporairement, en particulier sporadiquement, dans des intervalles de temps déterminés ou à la demande.

5. Procédé selon l'une quelconque des revendications précédentes,
**caractérisé en ce que**
pour la connexion bidirectionnelle on choisit une connexion de téléphone mobile ou de données.

6. Procédé selon l'une quelconque des revendications précédentes,
**caractérisé en ce que**
la voie de transmission unidirectionnelle est établie en utilisant un réseau de diffusion, en particulier une voie radio, une voie de transmission radio, un réseau câblé, un mécanisme de messagerie d'un réseau de communication numérique existants ou des lignes de signalisation existantes.

7. Procédé selon l'une quelconque des revendications précédentes,
**caractérisé en ce que**
l'émetteur est relié à une ou plusieurs sources (A) qui fournissent les informations à transmettre, et des informations sont transmises depuis les sources (A) vers l'émetteur (B).

8. Procédé selon la revendication 7,
**caractérisé en ce qu'**
une connexion est établie via Internet entre une source (A) et l'émetteur (B).

9. Procédé selon l'une quelconque des revendications précédentes,
**caractérisé en ce qu'**
on enregistre dans les listes uniquement des informations ayant des caractéristiques définies.

10. Procédé selon la revendication 9,
**caractérisé en ce qu'**
une caractéristique définie est un intervalle de temps dans lequel l'information a été transmise.

11. Procédé selon l'une quelconque des revendications précédentes,
**caractérisé en ce qu'**
en cas de conditions définies, on efface les listes et/ou les informations copiées situées dans la zone d'accès de l'émetteur (B).
